# EUROPÄISCHE PATENTSCHRIFT

(11) **EP 2 983 968 B1**
(45) Veröffentlichungstag und Bekanntmachung des Hinweises auf die Patenterteilung: **17.01.2018**
(21) Anmeldenummer: 14709877.6
(22) Anmeldetag: 27.02.2014
(51) Int. Cl.: B62D 35/00

(54) **HECKSPOILEREINRICHTUNG FÜR EIN FAHRZEUG**
REAR SPOILER DEVICE FOR A VEHICLE
SYSTÈME DE BECQUET ARRIÈRE POUR VÉHICULE

(30) Priorität: 13.04.2013 DE 102013006376
(43) Veröffentlichungstag der Anmeldung: 17.02.2016
(73) Patentinhaber: WABCO GmbH, 30453 Hannover (DE)
(72) Erfinder: DIECKMANN, Thomas, 30982 Pattensen (DE); INKERMANN, David, 38106 Braunschweig (DE); RICHTER, Timo, 38106 Braunschweig (DE); ZIELKE, Frank, 30890 Barsinghausen (DE)
(74) Vertreter: Lauerwald, Jörg
(86) Internationale Anmeldenummer: PCT/EP2014/000519
(87) Internationale Veröffentlichungsnummer: WO 2014/166568

(56) Entgegenhaltungen:
- WO-A1-2013/178366
- WO-A2-2008/024386
- DE-A1-102011 122 305
- DE-A1-102012 015 774
- US-A1- 2004 119 319

## Beschreibung

Die Erfindung betrifft eine Heckspoilereinrichtung für ein Fahrzeug, insbesondere Nutzfahrzeug, und eine Anordnung aus einem Nutzfahrzeug mit einer derartigen Heckspoilereinrichtung.

Heckspoiler dienen der Verbesserung der Aerodynamik des Fahrzeugs und können den Kraftstoffverbrauch entsprechend senken. Sie werden im Heckbereich des Fahrzeugs angebracht und weisen im Allgemeinen Luftleitelemente auf, die die Konturen des Fahrzeugs nach hinten verlängern, z. B. mit gekrümmten Flächen. Derartige Heckspoiler können am Dach oder an den Seitenwänden befestigt werden.

Die DE 20 2009 014 476 U1, DE 20 2009 014 510 U1 und DE 20 2009 015 009 U1 zeigen Heckspoilerausbildungen, bei denen die Luftleitelemente bzw. Spoilerelemente verschiebbar oder schwenkbar angeordnet sind, um ein ungestörtes Öffnen der Tür zu ermöglichen.

Schwenk- oder klappbare Heckspoiler werden im Allgemeinen am Scharnier der Hecktür angebunden. Die DE 102 28 658 A1 zeigt verschiedene Klapplösungen, bei denen über ein Scharnier schwenkbare Planflächen im Fahrbereich eine aerodynamische Optimierung ermöglichen sollen.

Die DE 10 2008 036 888 A1 zeigt Ausbildungen von Heckspoilern und Anbindungen am Fahrzeug, bei denen u. a. vorgesehen ist, zwischen der Hecktür und dem Luftleitelement einen Mitnehmer anzubringen, der für eine weitgehend ausgeschwenkte Stellung der Tür ausgehängt werden kann. Beim Ausschwenken der Heckklappe nach außen um ihre vertikale Schwenkachse wird das Luftleitelement somit zunächst mit geschwenkt, bis es an die Außenflächen der Seitenwand gelangt. Beim nachfolgenden Ausschwenken der Heckklappe wird das flexible Mitnehmerelement entsprechend elastisch verformt.

Derartige Anbindungen der Luftleitelemente im Scharnierbereich ermöglichen im Allgemeinen eine Verstellung des Luftleitelementes zwischen der Hecktür und der Seitenwand, wenn die Hecktür - wie bei Nutzfahrzeugen oftmals vorgesehen - um 270° nach außen geschwenkt wird, um sie z. B. an der Seitenwand zu befestigen.

Derartige Systeme sind jedoch im Allgemeinen recht aufwendig. Sie weisen u. a. komplexe Gelenk- oder Scharnierausbildungen auf. Weiterhin ermöglichen einige Heckspoilersysteme lediglich den Einsatz relativ kurzer Luftleitelemente, wodurch die Verbesserung der Aerodynamik begrenzt ist.

Weiterhin ist dieser Bauraum im Scharnierbereich der Hecktür bei auf schwenkender Hecktür sehr eng, so dass komplexere Heckspoilerausbildungen den Aufschwenkvorgang um 270° beeinträchtigen können.

DE 10 2012 015 774 A1 offenbart ein Nutzfahrzeug mit einer Windleiteinrichtung, die zumindest ein Luftleitelement aufweist, das zur Reduzierung eines Luftwiderstands an einem Nutzfahrzeugheck angeordnet ist, und mit einer Lagereinheit, die das zumindest eine Luftleitelement schwenkbar lagert.

Es wird vorgeschlagen, dass die Lagereinheit eine lösbare Koppelverbindung aufweist und das zumindest eine Luftleitelement mit seinem der lösbaren Koppelverbindung zugeordneten Koppelelement um wenigstens eine Schwenkachse der Lagereinheit schwenkbar gelagert ist.

Der Erfindung liegt die Aufgabe zugrunde, eine Heckspoilereinrichtung zu schaffen, die mit relativ geringem Aufwand ausbildbar ist und eine sichere Verstellung zwischen Fahrstellung und Grundstellung ermöglicht.

Diese Aufgabe wird durch eine Heckspoilereinrichtung nach Anspruch 1 gelöst. Die Unteransprüche beschreiben bevorzugte Weiterbildungen.

Weiterhin ist eine Anordnung aus einem Nutzfahrzeug und einer derartigen, in seinem Heckbereich angebrachten Heckspoilereinrichtung vorgesehen.

Erfindungsgemäß weist die Heckspoilereinrichtung somit mindestens einen Seitenspoiler, einen Dachspoiler, eine Verriegelungseinrichtung zur Verriegelung des Seitenspoilers und eine Kopplungseinrichtung zur Kopplung der Verriegelung mit der Verstellung des Dachspoilers auf.

Bei der üblichen Ausbildung eines Fahrzeughecks mit zwei jeweils seitlich aufschwingenden Hecktüren weist die Heckspoilereinrichtung somit vorzugsweise zwei Seiten- Luftleitelemente und zwei Dach-Luftleitelemente auf, die an jeweils einer der Hecktüren anzubringen sind.

Die Schwinge ist über ein erstes Drehgelenk, insbesondere eine vertikale erste Drehachse mit mehreren Drehgelenken, an der Hecktür anbringbar. Das Seiten-Luftleitelement ist vorzugsweise über eine zweite Drehachse an der Schwinge angelenkt. Vorteilhafterweise sind mehrere erste Drehgelenke und mehrere zweite Drehgelenke jeweils vertikal beabstandet ausgebildet.

In der Fahrstellung erfolgt eine Verriegelung durch die Verriegelungseinrichtung, die insbesondere an der Schwinge verstellbar, z. B. schwenkbar aufgenommen ist und mit einerseits dem Seiten-Luftleitelement und andererseits der Hecktüre oder der Fahrzeugstruktur verriegelt. Hierzu greift die Verriegelungseinrichtung insbesondere mit Rasthaken zum lösbaren Einrasten in Rastaufnahmen am vorderen Ende des Seiten- Luftleitelementes und in Rastaufnahmen an der Hecktür oder der Fahrzeugstruktur. Indem dieses Einrasten oder Verriegeln von oben erfolgt, wird eine Stabilisierung durch die eigene Gewichtskraft, insbesondere mit selbstzentrierender Aufnahme, ermöglicht.

Die Betätigung der Verriegelungseinrichtung kann insbesondere manuell erfolgen. Sie kann z. B. durch einen schwenkbaren Betätigungshebel erfolgen, der die Verriegelungseinrichtung verstellt, z. B. schwenkt.

Der Dachspoiler klappt vorzugsweise nach unten in seine Grundstellung ein und wird über die Kopplungseinrichtung nach oben aufgestellt. Diese Verstellung ist durch die Kopplungseinrichtung mit der Arretierung des Seiten- Luftleitelementes gekoppelt.

Die Kopplungseinrichtung kann insbesondere derart ausgebildet sein, dass durch eine einzige Betätigungs-Bewegung des Benutzers sowohl die Arretierung der Verriegelungseinrichtung zur Verriegelung des Seitenspoilers als auch die Verstellung des Dachspoilers erfolgt. Hierbei kann z. B. auch die Betätigungs-Bewegung durchgängig für die Verstellung des Dachspoilers und nur in einem Teilweg für die Verstellung und Arretierung der Verriegelungseinrichtung genutzt werden.

Auch die Rückverstellung, d.h. das Lösen der Arretierung des Seitenspoilers und die Rückverstellung des Dachspoilers, kann gekoppelt durch dieselbe Betätigungseinrichtung erfolgen.

Somit wird eine verriegelbare und nach Entriegelung schwenkbare bzw. verstellbare Anordnung ausgebildet. Das Seiten-Luftleitelement kann mit seiner Vorderkante insbesondere bündig an die entsprechende Seitenwand des Fahrzeugs anschließen bzw. fluchten. Anders als bei herkömmlichen Anbindungen des Seiten-Luftleitelementes am Scharnier ist das Seiten- Luftleitelement jedoch vorzugsweise an seinem vorderen Endbereich an der Schwinge verriegelbar und in einem hinteren Bereich an der Schwinge angelenkt, um nach Entriegelung um die Schwinge und mit der Schwinge zur Mitte der Hecktür geschwenkt zu werden.

Hierdurch werden bereits einige Vorteile erreicht. Der ansonsten enge Bauraum im Scharnierbereich der Hecktür wird vorzugsweise nicht oder nicht in relevantem Umfang belegt; das seitliche Seiten-Luftleitelement kann nach der Entriegelung um die Schwinge zur Mitte hin eingeschwenkt werden, so dass die gesamte Hecktür nachfolgend nach außen um z. B. etwa 270° geschwenkt und z. B. an der Seitenwand angelegt oder befestigt werden kann. Der Seitenspoiler mitsamt Seiten- Luftleitelement und Schwinge wird somit zwischen der Hecktür und der Seitenwand aufgenommen, ohne im Scharnierbereich störend zu wirken. Die Gesamtlänge aus Schwinge und Seiten- Luftleitelement kann z. B. derart gewählt sein, dass der in der Grundstellung vollständig umgelegte Seitenspoiler sich etwa zur Türkante (Mitte des Fahrzeughecks) hin erstreckt; somit wird die Befestigung der Hecktür an der Seitenwand nicht durch den Seitenspoiler gestört.

Das erste Drehgelenk der Schwinge wird an der Hecktür vorteilhafterweise hinreichend vom Scharnier beabstandet angebracht, z. B. mit 10 cm oder mehr Abstand von dem Scharnier der Hecktür. Für die Befestigung können z. B. Löcher in die Hecktür gebohrt werden, die dann durch die ersten Drehgelenke wiederum verschlossen werden.

Es ergibt sich in der Fahrstellung bei geschlossener Hecktür die Ausbildung eines stabilen Dreiecks, dessen Seiten durch die Schwinge, das Seiten-Luftleitelement und das Fahrzeug gebildet werden und dessen Ecken durch das mindestens eine erste Drehgelenk, das zweite Drehgelenk und dem Verriegelungsmittel gebildet werden.

Dieser Ausbildung liegt der erfindungsmäßige Gedanke zugrunde, dass eine Ausbildung eines derartigen Dreiecks stabil ist, auch wenn zwei der Ecken durch Drehgelenke bzw. Drehlager ausgebildet sind. Es ergibt sich erfindungsgemäß eine Ausbildung, die auch ein Flattern oder nachgiebiges Vibrieren der Seiten-Luftleitelemente während der Fahrt verhindert oder gering hält, da das Seiten-Luftleitelement an seinem vorderen Endbereich arretiert und in einem weiter hinten gelegenen Bereich durch die Schwinge gehalten wird. Somit kann das Material des Seiten- Luftleitelementes ggf. freier, z. B. auch dünner gewählt werden als bei herkömmlichen Ausbildungen mit lediglich vorne angebundenem Luftleitelement.

Ein derartiger erfindungsgemäßer Seitenspoiler ermöglicht eine Anbringung an unterschiedlichen Türvarianten und Türsystemen; insbesondere ist die genau Ausbildung des Scharniers der Hecktüren nicht relevant, die bei verschiedenen Herstellern und Fahrzeugtypen sehr unterschiedlich sein kann; es sind lediglich Befestigungen des ersten Drehlagers an der Hecktür durch z. B. Bohren von Löchern, und eine Rastaufnahme für de Verriegelungseinrichtungen an der Hecktür oder der Fahrzeugstruktur vorzusehen.

Vorteilhafterweise wird die gesamte Heckspoilereinrichtung ausschließlich an der Hecktür bzw. dem Türblatt der Hecktür befestigt. Hierbei weist der Dachspoiler vorzugsweise eine Befestigungseinrichtung zur Befestigung an der Hecktür auf, gegenüber der das Dach-Luftleitelement schwenkbar ist. Die Befestigungseinrichtung kann z. B. überwiegend oder sogar ausschließlich von oben in die Hecktür bzw. das Türblatt der Hecktür gesetzt werden.

Es ergeben sich durch den erfindungsgemäßen Dachspoiler einige Vorteile. So ist vorteilhafterweise eine Befestigung des Dachspoilers an der Fahrzeugstruktur oder dem Fahrzeugdach nicht erforderlich; eine Befestigung an der Hecktür ist ausreichend. Somit ist die Befestigung schnell ausbildbar und von Dachtypen oder der Ausbildung der Dachstruktur unabhängig. Indem Vorzugsweise der Dachspoiler sogar lediglich an der Oberkante der Hecktür befestigt wird, z. B. durch vertikales Einhängen, ist ein schneller Anbringvorgang möglich, ohne die Außenfläche der Hecktüren zu belegen.

Durch die erfindungsgemäße Kopplung der Verriegelung der Verriegelungseinrichtung mit der Verstellung des Dach-Luftleitelementes treten insbesondere synergistische Effekte auf, da beim Entriegeln des Seitenspoilers bereits der Dachspoiler eingefahren (heruntergeschwenkt) wird und somit nachfolgend ein Auflegen der Schwinge und des Seiten-Luftleitelementes ermöglicht, wobei gegebenenfalls auch die Schwinge vertikal kürzer ausgebildet sein kann, so dass sie nur auf die Hecktür gelegt wird und sich in vertikaler Richtung nicht bis zu dem Dach- Luftleitelement erstreckt.

Somit kann eine einfache Handhabung und Verstellung von einem hinter der Hecktür stehenden Benutzer erreicht werden.

Die Erfindung wird im Folgenden anhand der beiliegenden Zeichnungen an einigen Ausführungsformen erläutert. Es zeigen:
- Fig. 1: ein Nutzfahrzeug in perspektivischer Heckansicht bei geschlossenen Hecktüren mit einer Heckspoilereinrichtung gemäß einer Ausführungsform in Fahrstellung;
- Fig. 2: eine weitere perspektivische Ansicht mit einer geöffneten und vollständig vorgeschwenkten Hecktür;
- Fig. 3: eine der Fig. 1 entsprechende Ansicht mit in Grundstellung verstellter Heckspoilereinrichtung bei geschlossener Hecktür;
- Fig. 4: eine Darstellung bei geschlossenen Hecktüren und in Fahrstellung verstelltem Seitenspoiler vor der Verriegelung;
- Fig. 5: eine auf Fig. 4 folgende Darstellung der kombinierten Betätigung der Verriegelung des Seitenspoilers und Verstellung des Dachspoilers;;

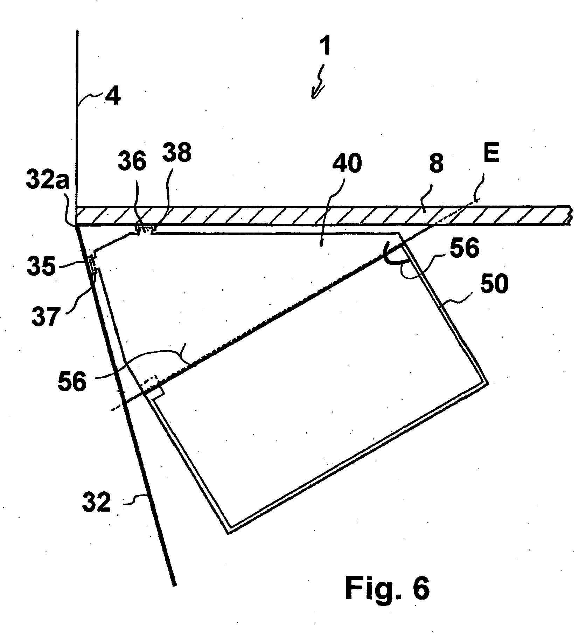

- Fig. 6: einen Vertikalschnitt aus Fig. 4 mit Draufsicht auf eine Klappe,
- Fig. 7: eine Fig. 5 entsprechende Darstellung der Betätigung des Betätigungshebels in drei Hebelpositionen a), b) c), ohne Darstellung der Verriegelung durch die Klappe;
- Fig. 8: eine schematisierte Darstellung der Kopplung zwischen Klappe und Schubstange gemäß einer Ausführungsform mit Doppelgelenk;
- Fig. 9: eine zu Fig. 8 alternative Ausführungsform mit Kopplung durch eine Schiene;
- Fig. 10: eine zu Fig. 8 und 9 alternative Ausführungsform mit Kopplung durch einen Oberlichthebel;
- Fig_{.} 11: eine zu Fig. 8 bis 10 alternative Ausführungsform mit Kopplung durch eine Schere;
- Fig. 12: eine zu Fig. 8 bis 11 alternative Ausführungsform mit Kopplung durch eine kurze Stangenkopplung;
- Fig. 13: eine zu Fig. 8 bis 12 alternative Ausführungsform mit Kopplung durch eine lange Stangenkopplung; und
- Fig. 14: eine perspektivische Hinteransicht einer Hecktüre mit von oben eingesetztem Dachspoiler.

Ein Nutzfahrzeug 1 weist eine Fahrzeugstruktur 2 auf, die im hinteren Bereich auch als Portal bezeichnet wird, sowie einen Laderaum 3, der nach außen durch Seitenwände 4, 5 und nach oben durch ein Fahrzeugdach 6 begrenzt ist; die Seitenwände 4, 5 und das Fahrzeugdach 6 können bei z. B. einem Kastenwagen fest bzw. als tragende Teile ausgebildet sein und entsprechend fest mit der Fahrzeugstruktur 2 verbunden sein; weiterhin ist auch die Ausbildung der Seitenwände 4, 5 und ggf. des Fahrzeugdachs 6 mit Planen bekannt.

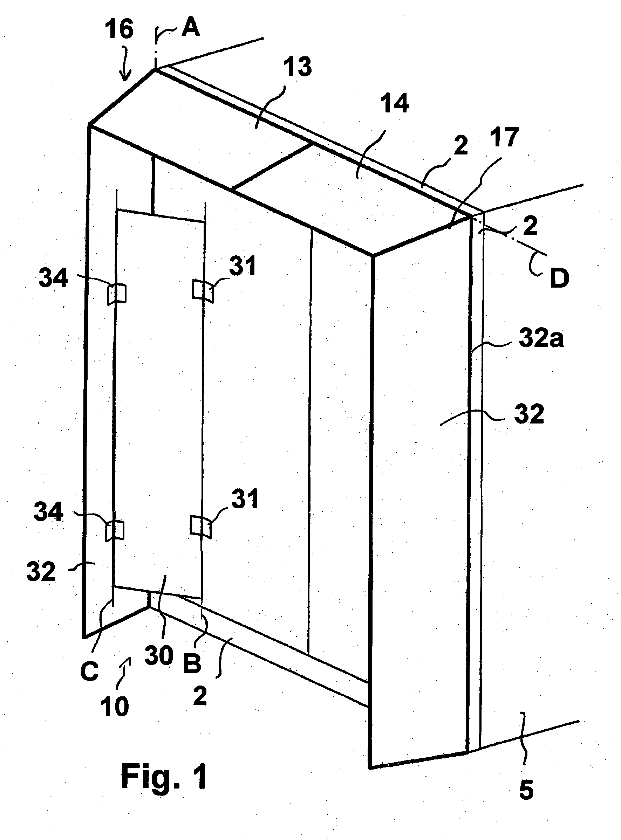

Der Laderaum 3 ist nach hinten durch zwei Hecktüren 8, 9 verschließbar, die von ihrer geschlossenen Stellung der Fig. 1 ausgehend um ihr Scharnier 7 (bzw. mehrere Scharniere 7) um etwa 270° nach außen um ihre jeweilige Schwenkachse A schwenkbar und z. B. an der jeweiligen Seitenwand 4, 5 anlegbar oder auch verriegelbar sind.

An dem Nutzfahrzeug 1 ist eine Heckspoilereinrichtung 10 angebracht, die zwei Dachspoiler 13, 14 und zwei Seitenspoiler 16 und 17 aufweist.

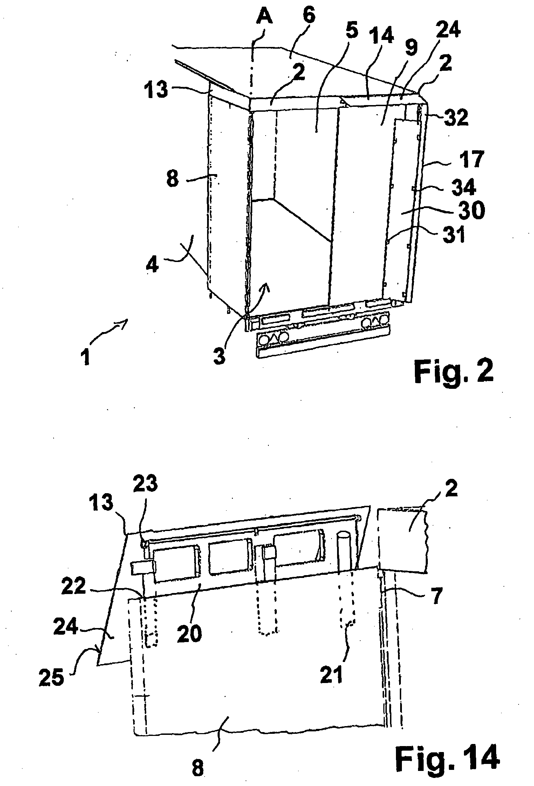

Die beiden Dachspoiler 13, 14 werden vorteilhafterweise ausschließlich an den beiden Hecktüren 8, 9 befestigt, indem sie z. B. von oben her eingesetzt werden. Gemäß Fig. 14 weist der (in Fahrtrichtung) linke Dachspoiler 13 ein ein Dach-Luftleitelement 24 und eine Befestigungseinrichtung (Lagerteil) 20 auf, die an der Hecktür 8 befestigt wird; hierzu kann die Befestigungseinrichtung 20 z. B. drei sich vertikal nach unten erstreckende Einsetz-Stangen 21 auf, die von oben in die Hecktür 8 gesetzt werden; falls die Hecktür 8 an ihrer oberen Seite bereits offen ist, können die Einsetz-Stangen 21 entsprechend direkt eingesetzt werden; bei einem geschlossenen Türblatt können zunächst Löcher 22 in die Oberkante 8 a der Hecktür gebohrt werden, in die dann nachfolgend die Einsetz-Stangen 21 von oben eingesetzt werden.

Weiterhin weist die Befestigungseinrichtung 20 eine Drehachse 23 auf, um eine Schwenkbewegung um eine Schwenkachse D für das Dach- Luftleitelement 24 zu ermöglichen. Das Dach-Luftleitelement 24 ist als einteiliges Kunststoff-Teil, z. B. Kunststoff-Spritzgussteil, gefertigt mit planer oder leicht gebogener Außenfläche 25, deren Formgebung als solches bekannt ist. Bei geschlossener Hecktür 8 bildet das Dach-Luftleitelement 24 im Wesentlichen eine Verlängerung des Fahrzeugdachs 6, z. B. mit leichter Neigung nach unten.

Die Befestigungseinrichtung 20 kann z. B. aus Stahl oder auch aus Kunststoff ausgebildet sein. Der gesamte Dachspoiler 13 ist somit in der gezeigten Ausführung z. B. zweiteilig mit der Befestigungseinrichtung 20 und dem Dach-Luftleitelement 24 ausgebildet, gegebenenfalls mit zusätzlicher Drehachse 23.

Die beiden Seitenspoiler 16,17 weisen jeweils eine Schwinge 30 und ein Seiten-Luftleitelement 32 auf. Die Schwinge 30 ist in einer vertikalen Schwenkachse B, z. B. über zwei erste Drehgelenke 31, an der Außenseite 8b der Hecktür 8 befestigt, wozu z. B. Löcher in die Hecktür 8 gebohrt werden können. Das Seiten- Luftleitelement 32 ist wiederum in einer vertikalen Schwenkachse B über zweite Drehgelenke 34 an der Schwinge 30 befestigt. Die Schwinge 30 kann z. B. aus Metall, z. B. Aluminium oder Stahl, gefertigt sein; das Seiten-Luftleitelement 32 ist wiederum vorteilhafterweise aus Kunststoff, z. B. als Spritzgussteil, ausgebildet.

Die Seiten-Luftleitelemente 32 bilden eine Verlängerung der Seitenwände 4, 5, wie es als solches bei Seitenspoilern üblich ist; hierzu können die Seiten-Luftleitelemente 32 eine plane oder geeignet gekrümmte Form aufweisen. Die Vorderkante 32a des Seiten- Luftleitelementes 32 schließt bündig mit der Seitenwand 4 oder 5, um einen geringen Luftwiderstand zu erzeugen. Die Drehgelenke 31, 34 sind vorteilhafterweise, wie in den Figuren gezeigt, an den Enden der Schwingen 30 ausgebildet. die zweiten Drehgelenke 34 sind z. B. in mittleren Bereichen der Seiten-Luftleitelemente 32 vorgesehen; sie können aber grundsätzlich auch in den hinteren Endbereichen der Seiten-Luftleitelemente 32 vorgesehen sein.

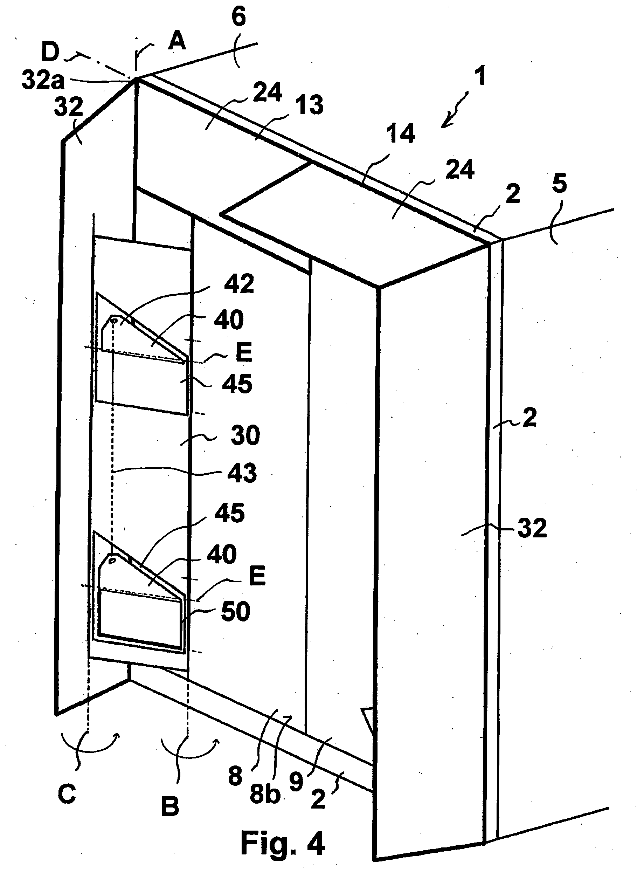

Zur Verriegelung der Seiten- Luftleitelemente 32 in der Fahrstellung der Fig. 1 sind in jeder Schwinge 30 als Verriegelungseinrichtungen zwei vertikal beabstandete Klappen 40 vorgesehen, die jeweils um eine horizontale Schwenkachse E schwenkbar in der Schwinge 30 aufgenommen sind. In Fig. 4 sind die Klappen 40 in ihrer vertikalen Ruhestellung, wobei sie z. B. in Ausnehmungen (Freiräumen) 45 der Schwinge aufgenommen sind. Die Klappen 40 weisen an ihrem in der Ruhestellung oberen Endbereich erste Rasthaken 35 und zweite Rasthaken 36 auf, die zum Verriegeln bzw. Arretieren oder Einrasten in Rastaufnahmen 37 des Seiten-Luftleitelementes 32 und Rastaufnahmen 38 der Hecktüre 8 vorgesehen sind.

Ein Betätigungshebel 50 kann von einem Benutzer von seiner vertikal unteren Grundstellung nach Entriegelung um insgesamt 180° hoch geschwenkt und in dieser vollständig betätigten Stellung wiederum verriegelt werden. Der Betätigungshebel 50 ist vorteilhafterweise zusammen mit einer Klappe 40, hier der unteren Klappe 40, in der Schwenkachse E gelagert. In seiner ersten Teil-Schwenkbewegung um 90° nimmt er die untere Klappe 40 z. B. über eine Kopplungsfeder 56 mit, so dass die Klappe 40 um die Schwenkachse E geschwenkt wird und ihre Rastnase 35 in der Rastaufnahme 37-an der-Innenseite des Seiten-Luftleitelementes 32 von oben einrastet, und weiterhin ihre Rastnase 36 in der Rastaufnahme 38 der Hecktüre 8 von oben einrastet. Somit wird eine Rastverbindung 39 gebildet, die die Bauteile 32, 8 und 30 miteinander verriegelt. Die Rastverbindung 39 bzw. Arretierung durch die Mittel 35, 36, 37, 38 ist vorteilhafterweise selbstzentrierend.

Die beiden Klappen 40 sind durch eine Arretierungs- Kopplungseinrichtung 42 in ihrer Position bzw. Schwenkbewegung gekoppelt und verlaufen hierdurch immer parallel; die Arretierungs- Kopplungseinrichtung 42 ist hierzu als Parallel-Führungsgestänge ausgebildet, z. B. mit einer Arretierungs- Kopplungsstange 43, die an den oberen Enden der beiden Klappen 40 angelenkt ist.

Die Schwinge 30 und das Seiten-Luftleitelement 32 bilden somit zusammen der jeweiligen Hecktür 8 oder 9 des Fahrzeugs 1 Seiten eines stabilen Dreieckes, dessen Ecken durch die beiden Drehgelenke 31, 34 und Rastverbindungen 39 gebildet werden.

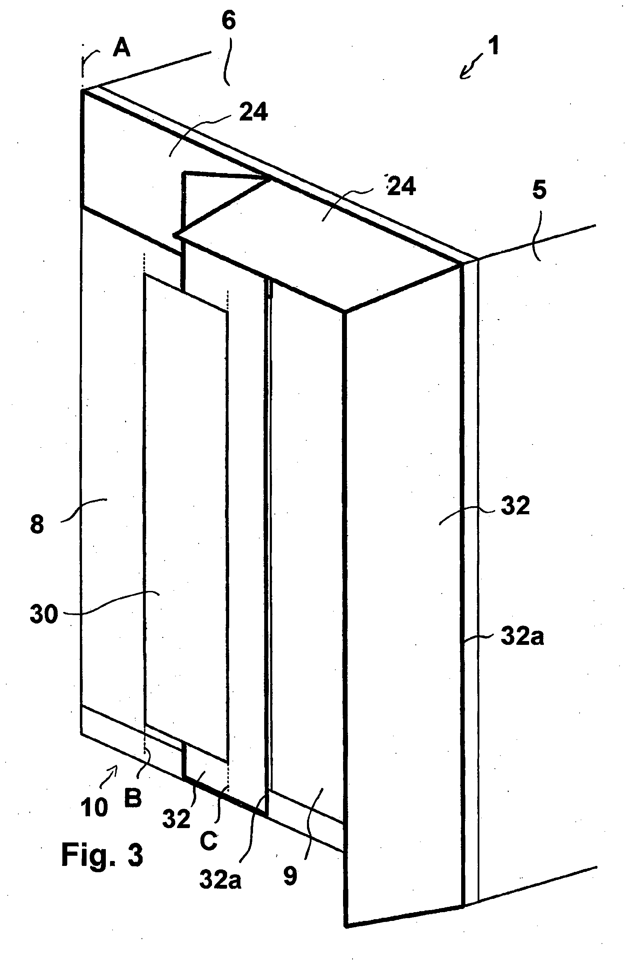

In der Grundstellung der Fig. 3, linke Seite, liegt das Dach- Luftleitelement 32 flach auf der Hecktür 8 auf. Das Seiten-Luftleitelement 32 liegt auf der Hecktür 8 und dem Dach- Luftleitelement 32 flach auf; die Schwinge 30 liegt somit auf dem Seiten-Luftleitelement 32 und der Hecktür 8 auf. Die Hecktür ist somit um 270° nach vorne in die Position der Fig. 2 schwenkbar.

Von Fig. 3 ausgehend erfolgt eine Verstellung in die Fahrstellung, indem das Seiten-Luftleitelement 32 nach hinten geschwenkt wird und somit um seine Achse C schwenkt, wobei weiterhin auch die Schwinge 30 um die Achse B an der Hecktür 8 geschwenkt wird, bis die Vorderkante 32a etwa in Verlängerung der linken Seitenwand 4 liegt, wie in Fig. 4 gezeigt. Diese Verstellung kann von einer Person hinter der Hecktüre 8 stehend einfach vorgenommen werden.

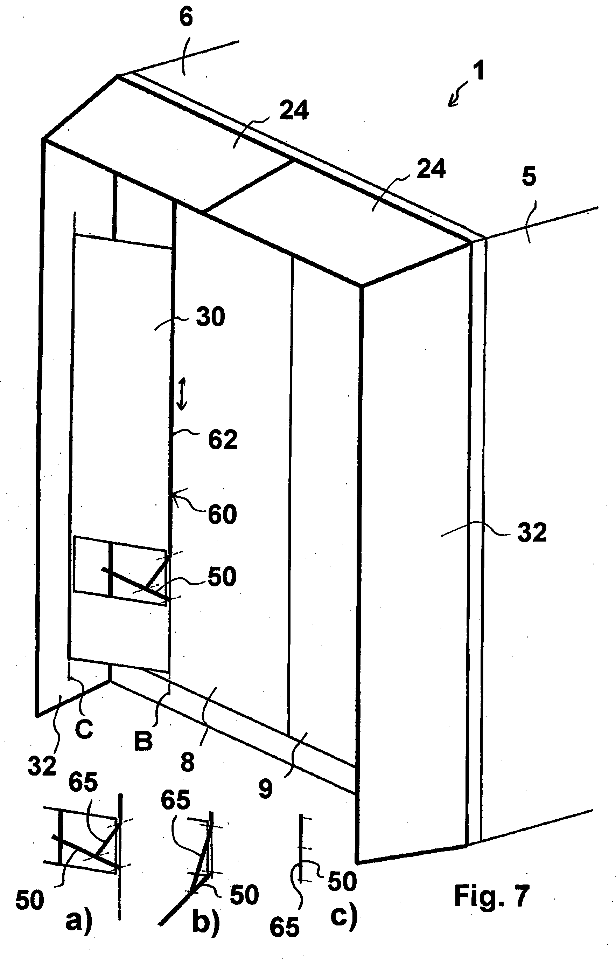

Nachfolgend entriegelt der Benutzer den Betätigungshebel 50 und schwenkt diesen dann in einer einzigen Schwenkbewegung um etwa 180° nach oben um die untere Achse E. In Fig. 7 ist hierbei lediglich aus Gründen der Übersichtlichkeit die Verriegelung durch die Klappe nicht gezeigt.

In einer ersten Teil-Schwenkbereich um etwa 90°, die der Stellung von Fig. 7 b) entspricht, schwenkt der Betätigungshebel 50 die untere Klappe 40 aufgrund der Kopplung durch eine Kopplungsfeder 56, so dass die untere Klappe 40 und durch die Arretierungs- Kopplungsstange 43 auch die obere Klappe 40 mit ihren Rasthaken 35, 36 in die Rastaufnahmen 37, 38 eingreifen und somit mit dem Seiten- Luftleitelement 32 und der Hecktüre 8 verriegeln. In dem nachfolgenden zweiten Teil-Schwenkbereich um weitere 90° verändert sich diese Anordnung nicht mehr; die Kopplungsfeder ist hierzu nachgiebig ausgebildet. Nach der gesamten Schwenkbewegung um 180° wird der Betätigungshebel 50 in seiner oberen Stellung entsprechend Fig. 7 c) verriegelt.

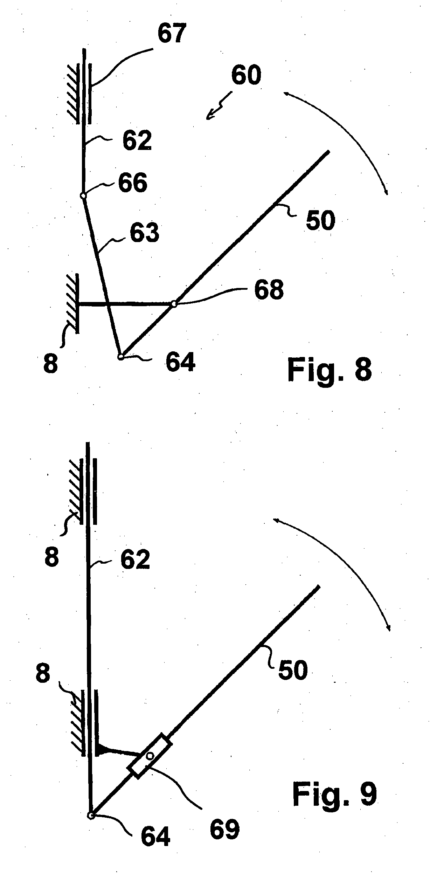

Weiterhin wird in der gesamten Schwenkbewegung des Betätigungshebels 50 um 180° über eine Kopplungseinrichtung 60 das Dach- Luftleitelement 24 von seiner eingeklappten Grundstellung mit Anlage an der Hecktüre 8 aufgerichtet, z. B. um einen Aufstell-Winkel zwischen 0°und weniger als 90°. Die Kopplungseinrichtung 60 weist hierzu eine Kopplungs- Schubstange 62 auf, die an ihrem unteren Ende direkt oder indirekt an dem Betätigungshebel 50 angelenkt ist und an der Hecktür 8 - z. B. etwa in der Schwenkachse B - vertikal nach oben verläuft. Die Figuren 8 bis 10 zeigen hierzu verschiedene Ausbildungen.

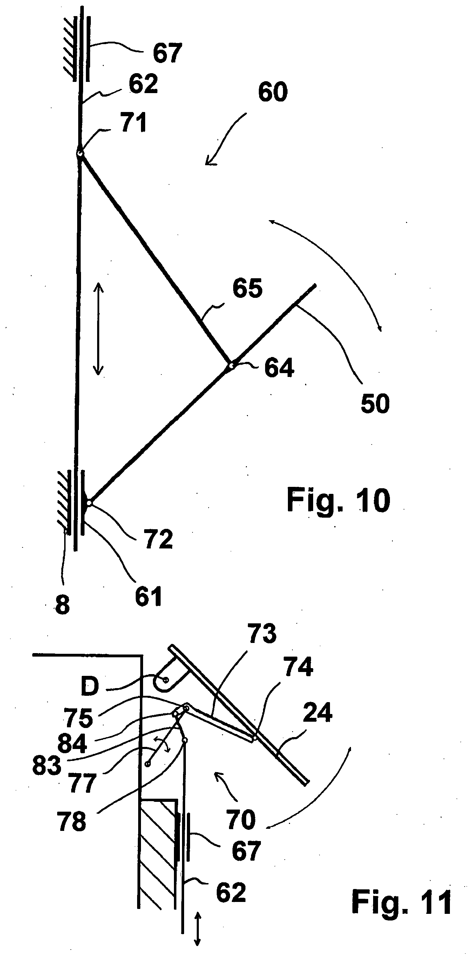

Die Ausführungsform der Fig. 10 ist vereinfacht auch in Fig. 7a) bis c) dargestellt und zeigt eine Betätigung mittels eines Oberlichthebels. Der Betätigungshebel 50 ist in einem Gelenk 72 eines Schwenklagers 61 der Hecktür 8 oder auch der Schwinge 30, d.h. im Bereich der Achse B, angelenkt. An dem Betätigungshebel 50 ist in einem Gelenk 64 ein Zwischenglied 65 angelenkt, das an seinem anderen Ende in einem weiteren Gelenk 71 an der Schubstange 62 angelenkt ist, die in Schiebelagern 67 im Bereich der Achse B, d.h. an Hecktür 8 und/oder an der Schwinge 30 geführt ist. Bei Hochschwenken des Betätigungshebels 50 wird somit die Schubstange 62 nach oben geschoben.

Bei der Ausführungsform der Fig. 8 wird der Betätigungshebel 50 nach unten geschwenkt, um die Schubstange in ihrem Schiebelager 67 nach oben zu verstellen. Der Betätigungshebel 50 ist in einem mittleren Bereich in einem Lagergelenk 68 an der Hecktüre 8 oder der Schwinge 30 gelagert, insbesondere im Bereich der Schwenkachse B und somit an der gelenkigen Anbindung der Schwinge 30 an der Hecktüre 8 angeordnet sein. Ein unteres Hebelgelenk 64 schwenkt somit entgegen gesetzt zum Betätigungshebel 51, dass heißt bei Herunterschwenken des Betätigungshebels 50 nach oben, und schiebt über ein Zwischenglied 63 und ein Gelenk 66 die Schubstange 62 nach oben.

Auch bei der Ausführungsform der Fig. 9 wird der Betätigungshebel 50 nach unten geschwenkt, um die Schubstange in ihrem Schiebelager 67 nach oben zu verstellen. An dem Betätigungshebel 50 ist ein Schiebelager 69 aufgenommen, das gelenkig an der Hecktüre 8 oder der Schwinge 30 gelagert, insbesondere im Bereich der Schwenkachse B. Somit kann das untere Hebelgelenk 64 direkt die die Schubstange 62 verschieben, da sich das Schiebelager 69 in seiner Position entsprechend einstellt.

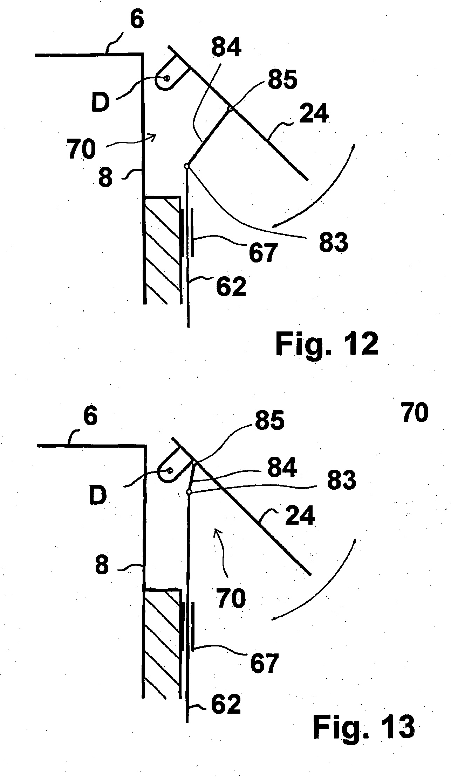

An ihrem oberen Ende schwenkt die Kopplungs- Schubstange 62 über eine Verstell-Anbindung 70 das Dach- Luftleitelement 24 nach oben. Die Figuren 11 bis 13 zeigen verschiedene Ausbildungen der Verstell-Anbindung 70. Vorteilhaft sind insbesondere die Ausführungsformen der Fig. 12 mit kurzer Stangenkopplung und Fig. 13 langer Stangenkopplung, da hier eine Verstellung des Dach- Luftleitelementes 24 in die Fahrstellung durch eine Schubbewegung der Schubstange 62 möglich ist. In beiden Fällen ist die Schubstange 62 an ihrem oberen Ende über ein Gelenk 83 und ein Zwischenglied 84 in einem Gelenk 85 an das Dach- Luftleitelement 24 angelenkt, in diesen Ausführungsformen mit unterschiedlicher Hebellänge des Dach- Luftleitelementes 24 um dessen Schwenkachse D.

Gemäß der hierzu alternativen Ausbildung nach Fig. 11 mit einem Scherenmechanismus ist das obere Ende de Schubstange 62 in einem Gelenk 83 an einem Zwischenglied 84 angelenkt, das in einem Gelenk 76 an einem Ende eines Knickstabes 73 angelenkt ist, der um eine Achse 75 schwenkbar ist, die wiederum über einen Hebel 77 an der Hecktüre 8 oder der Schwinge 30 schwenkbar ist. Das andere Ende des Knickstabes 73 ist in einem Gelenk 74 an dem Dach- Luftleitelement 24 angelenkt. Somit wird bei Zug an der Schubstange 62, z. B. über die Hebelanbindung nach Fig. 8 oder 9, das Dach-Luftleitelement 24 nach oben geschwenkt.

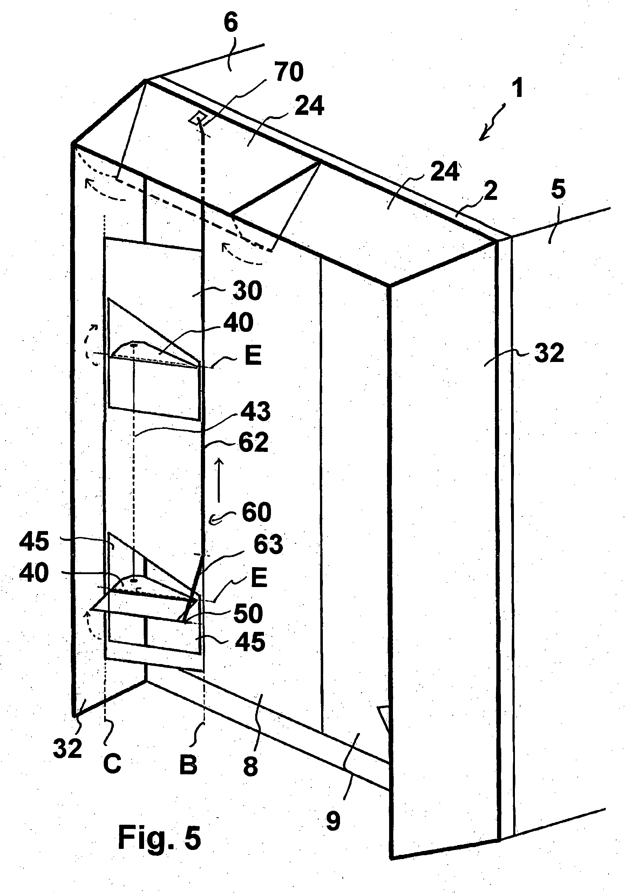

Zur Rückverstellung von der Fahrstellung der Fig. 1 und 5 in die Grundstellung der Fig. 3, linke Seite, wird zunächst der Betätigungshebel 50 in seiner oberen Stellung entriegelt und nachfolgend um 180 ° nach unten geschwenkt. In dem gesamten Schwenkbereich wird über die Verstell- Anbindung 70 das Dach- Luftleitelement 24 nach unten geschwenkt. In dem zweiten, oberen Teil-Schwenkbereich von 180° auf 90° werden die Klappen 40 nicht verstellt. Nachfolgend wird in dem unteren, ersten Teil- Schwenkbereich von 90° auf 0° die untere Klappe 40 von einem Mitnehmer des Betätigungshebels 50 mitgenommen und nach oben geschwenkt, wobei die obere Klappe 40 über die die Arretierungs- Kopplungsstange 43 mit geschwenkt wird, bis beide Klappen 40 wieder in ihre vertikale Grundstellung in den Ausnehmungen 45 der Schwinge 30 aufgenommen sind.

Nachfolgend werden die gesamten Seitenspoiler 16, 17 jeweils zur Mitte hin eingeklappt, indem z. B. ein Benutzer das jeweilige Seiten- Luftleitelement 32 ergreift und in einer großen Schwenkbewegung derartig nach innen schwenkt, dass das Seiten-Luftleitelement 32 um die zweiten Drehgelenke 34 an der Schwinge 30 und die die Schwinge 30 in den ersten Drehgelenken 31 an der Hecktür 8 bzw. 9, d.h. beiden Schwenkachsen B und C, schwenkt. Bei dieser Verstellung in die Grundstellung wird die Schwinge 30 z. B. um etwa 100° umgelegt wird und das Seiten-Luftleitelement 32 gegenüber der Schwinge 32 ergänzend um z. B. wiederum etwa 100° geschwenkt.

Dann werden die Hecktüren 8, 9 um ihre Schwenkachsen A vollständig nach außen umgelegt, mit einem Gesamt-Schwenkwinkel von etwa 270°. Die Heckspoilereinrichtung 10 mit Dachspoilern 13, 14 und Seitenspoilern 16, 17 wird somit zwischen der Hecktür 8 oder 9 und der Seitenwand 3 oder 4 aufgenommen.

## Patentansprüche

1. Heckspoilereinrichtung (10) für ein mindestens eine Hecktür (8, 9) aufweisendes Fahrzeug (1), wobei die Heckspoilereinrichtung (10) mindestens aufweist:
ein Seiten-Luftleitelement (32) und ein Dach-Luftleitelement (24), die zwischen einer Grundstellung und einer Fahrstellung zur Konturverlängerung und aerodynamischen Luftleitung bei geschlossener Hecktür (8, 9) verstellbar sind, wobei
die Heckspoilereinrichtung (10) eine Schwinge (30) mit einem ersten Drehgelenk (31) zur schwenkbaren Befestigung an der Hecktür (8, 9) aufweist, wobei die Schwinge (30) über mindestens ein zweites Drehgelenk (34) verstellbar an dem Seiten-Luftleitelement (32) angebracht ist, **dadurch gekennzeichnet, dass**
mindestens eine Verriegelungseinrichtung (40) zur Verriegelung des Seiten- Luftleitelementes (32) mit der Schwinge (30) vorgesehen ist, und
eine Kopplungseinrichtung (60) zur Kopplung einer Verstellung der Verriegelungseinrichtung (40) mit der Verstellung des Dach- Luftleitelementes (24) vorgesehen ist.

2. Heckspoilereinrichtung nach Anspruch 1, **dadurch gekennzeichnet, dass** die Verriegelungseinrichtung (40) zur Verriegelung der Schwinge (30) mit sowohl dem Seiten- Luftleitelement (32) als auch dem Fahrzeug (1), z. B. der Hecktür (8) oder einem Strukturteil (2) des Fahrzeugs (1), ausgebildet ist.

3. Heckspoilereinrichtung (10) nach Anspruch 2, **dadurch gekennzeichnet, dass** die Verriegelungseinrichtung (40) verstellbar, insbesondere schwenkbar, an der Schwinge (30) angebracht ist und bei seiner Verstellung mit dem vorderen Endbereich (32a) des Seiten- Luftleitelementes (32), vorzugsweise auch der Hecktür (8, 9) oder einem Strukturteil (2) des Fahrzeugs, verriegelt.

4. Heckspoilereinrichtung nach Anspruch 3, **dadurch gekennzeichnet, dass** mindestens zwei Verriegelungseinrichtungen (40) vertikal zueinander beabstandet an der der Schwinge (30) schwenkbar angebracht und über eine Arretierungs-Kopplungseinrichtung (42) in ihrer Verriegelungsbewegung gekoppelt sind.

5. Heckspoilereinrichtung (10) nach einem der vorherigen Ansprüche, **dadurch gekennzeichnet, dass** die mindestens eine Verriegelungseinrichtung (40) eine schwenkbare Klappe (40) aufweist, an der Rasthaken (36) zum Eingriff in Rastaufnahmen (37) des Seiten- Luftleitelementes (32) und/oder Rastaufnahmen (38) der Hecktüre (8, 9) oder der Fahrzeugstruktur vorgesehen sind, insbesondere zum Eingriff von oben.

6. Heckspoilereinrichtung nach einem der vorherigen Ansprüche, **dadurch gekennzeichnet, dass** sie sowohl in ihrer Grundstellung als auch in ihrer Fahrstellung ausschließlich an der Hecktür (8, 9) befestigt ist.

7. Heckspoilereinrichtung (10) nach einem der vorherigen Ansprüche, **dadurch gekennzeichnet, dass** ein vom Benutzer zu schwenkender Betätigungshebel (50) vorgesehen ist, durch den in einer Schwenkbewegung zum einen die mindestens eine Verriegelungseinrichtung (40) in ihre verriegelte Stellung verstellbar ist und zum anderen über die Kopplungseinrichtung (60) das Dach-Luftleitelement (24) nach oben in seine Fahrstellung aufklappbar ist.

8. Heckspoilereinrichtung (10) nach Anspruch 7, **dadurch gekennzeichnet, dass** die Schwenkbewegung einen ersten und zweiten Teil-Schwenkbereich aufweist, wobei in dem ersten Teil-Schwenkbereich die mindestens eine Verriegelungseinrichtung (40) in ihre verriegelte Stellung verstellbar ist und in beiden Teil-Schwenkbereichen das Dach-Luftleitelement (24) verstellbar ist.

9. Heckspoilereinrichtung (10) nach Anspruch 7 oder 8, **dadurch gekennzeichnet, dass** der Betätigungshebel (50) mit einer Verriegelungseinrichtung (40) in einer gemeinsamen Schwenkachse (E) in oder an der Schwinge (30) schwenkbar aufgenommen ist und die Verriegelungseinrichtung über ein Mitnehmersystem in dem ersten Teil-Schwenkbereich mitnimmt und in dem zweiten Teil-Schwenkbereich freigibt.

10. Heckspoilereinrichtung (10) nach einem der Ansprüche 7 bis 9, **dadurch gekennzeichnet, dass** durch den Betätigungshebel (50) und die Kopplungseinrichtung (60) ein Übertragungsmittel, z. B. eine Schubstange (62), aktivierbar ist, über die eine Verstell-Anbindung (70) zur Verstellung des Dach- Luftleitelementes (24) aktivierbar ist.

11. Heckspoilereinrichtung nach einem der vorhergehenden Ansprüche, **dadurch gekennzeichnet, dass** das erste Drehgelenk (31) an einem vorderen Ende der Schwinge (30) und das zweite Drehgelenk (34) an einem hinteren Ende der Schwinge (30) vorgesehen ist.

12. Heckspoilereinrichtung (10) nach einem der vorhergehenden Ansprüche, **dadurch gekennzeichnet, dass** in der Fahrstellung durch die Schwinge (30), das Seiten-Luftleitelement (32) und das Fahrzeug (1) ein Dreieck ausbildbar ist, dessen Seiten durch die Schwinge (30), das Seiten-Luftleitelement (32) und die Hecktüre (8, 9) gebildet sind.

13. Heckspoilereinrichtung (10) nach Anspruch 12, **dadurch gekennzeichnet, dass** Ecken des Dreiecks durch das mindestens eine erste Drehgelenk (31) und das mindestens eine zweite Drehgelenk (34) gebildet sind.

14. Heckspoilereinrichtung (10) nach einem der vorhergehenden Ansprüche, **dadurch gekennzeichnet, dass** das Dach-Luftleitelement (24) schwenkbar an einer Befestigungseinrichtung (20) angelenkt ist, die ohne Befestigung an der Fahrzeugstruktur (2) lediglich an der Hecktür (8, 9) angebracht ist, insbesondere einer Oberkante (8 a) der Hecktür (8), z. B. in Öffnungen an der Oberkante (8 a) der Hecktür (8).

15. Heckspoilereinrichtung (10) nach einem der vorhergehenden Ansprüche, **dadurch gekennzeichnet, dass** nach ihrer Entriegelung der Verriegelungseinrichtung (40) das Seiten-Luftleitelement (32) um das zweite Drehgelenk (34) schwenkbar ist und die Schwinge (30) um das erste Drehgelenk (31) schwenkbar ist.

16. Heckspoilereinrichtung (10) nach Anspruch 15, **dadurch gekennzeichnet, dass** in der Grundstellung
- das Dach-Luftleitelement (24) flach auf die Hecktüre (8, 9) anlegbar ist,
- das Seiten-Luftleitelement (32) flach auf die Hecktüre (8, 9) und das Dach-Luftleitelement (24) anlegbar ist,
- die Schwinge (30) flach auf das Seiten-Luftleitelement (32) und die Hecktüre (8, 9) legbar ist, und
- die Hecktür (8, 9) des Fahrzeugs (1) von ihrer geschlossen Stellung um etwa 270° nach außen klappbar und an jeweils einer Seitenwand (4, 5) des Fahrzeugs (1) anlegbar ist.

17. Fahrzeug (1), insbesondere Nutzfahrzeug, mit Seitenwänden (4, 5), einer Fahrzeugstruktur (2) und Hecktüren (8, 9), wobei an jeder Hecktüre (8, 9) eine Heckspoilereinrichtung (10) nach einem der vorhergehenden Ansprüche angebracht ist, wobei die Hecktüren bei in ihre Grundstellung verstellten Heckspoilereinrichtungen (10) um 270° nach vorne schwenkbar und an den Seitenwänden (4, 5) anlegbar oder verriegelbar sind.

## Claims

1. Rear spoiler device (10) for a vehicle (1) which has at least one rear door (8, 9), wherein the rear spoiler device (10) has at least:
one lateral air direction element (32) and one roof air direction element (24) which can be adjusted between a basic position and a travel position for contour extension and aerodynamic air direction with the rear door (8, 9) closed, wherein
the rear spoiler device (10) has a link (30) having a first pivot joint (31) for pivotable securing to the rear door (8, 9), wherein the link (30) is fitted so as to be able to be adjusted to the lateral air direction element (32) by means of at least a second pivot joint (34), **characterized in that**
at least one locking device (40) for locking the lateral air direction element (32) to the link (30) is provided, and
a coupling device (60) for coupling an adjustment of the locking device (40) to the adjustment of the roof air direction element (24) is provided.

2. Rear spoiler device according to Claim 1, **characterized in that** the locking device (40) is constructed for locking the link (30) to both the lateral air direction element (32) and the vehicle (1), for example, the rear door (8) or a structural component (2) of the vehicle (1).

3. Rear spoiler device (10) according to Claim 2, **characterized in that** the locking device (40) is fitted to the link (30) so as to be able to be adjusted, in particular pivoted, and, when it is adjusted, locks with the front end region (32a) of the lateral air direction element (32), preferably also the rear door (8, 9) or a structural component (2) of the vehicle.

4. Rear spoiler device according to Claim 3, **characterized in that** at least two locking devices (40) are pivotably fitted vertically spaced apart from each other to the link (30) and are coupled in the locking movement thereof by means of a securing/coupling device (42) .

5. Rear spoiler device (10) according to one of the preceding claims, **characterized in that** the at least one locking device (40) has a pivotable flap (40), on which catch hooks (36) for engagement in catch receiving members (37) of the lateral air direction element (32) and/or catch receiving members (38) of the rear door (8, 9) or the vehicle structure are provided, in particular for engagement from above.

6. Rear spoiler device according to one of the preceding claims, **characterized in that** it is secured exclusively to the rear door (8, 9) both in the basic position and in the travel position thereof.

7. Rear spoiler device (10) according to one of the preceding claims, **characterized in that** there is provided an actuation lever (50) which is intended to be pivoted by the user and by means of which, on the one hand, the at least one locking device (40) can be adjusted into the locked position thereof in a pivot movement and, on the other hand, the roof air direction element (24) can be folded upward into the travel position thereof by means of the coupling device (60).

8. Rear spoiler device (10) according to Claim 7, **characterized in that** the pivot movement has a first and second part-pivot range, wherein the at least one locking device (40) can be adjusted in the locked position thereof in the first part-pivot range and the roof air direction element (24) can be adjusted in both part-pivot ranges.

9. Rear spoiler device (10) according to Claim 7 or 8, **characterized in that** the actuation lever (50) is pivotably received with a locking device (40) in a common pivot axis (E) in or on the link (30) and carries the locking device by means of a carrier system in the first part-pivot range and releases it in the second part-pivot range.

10. Rear spoiler device (10) according to one of Claims 7 to 9, **characterized in that** there can be activated by means of the actuation lever (50) and the coupling device (60) a transmission means, for example, a push rod (62), by means of which an adjustment connection (70) can be activated in order to adjust the roof air direction element (24).

11. Rear spoiler device according to one of the preceding claims, **characterized in that** the first pivot joint (31) is provided at a front end of the link (30) and the second pivot joint (34) is provided at a rear end of the link (30).

12. Rear spoiler device (10) according to one of the preceding claims, **characterized in that** there can be formed in the travel position by the link (30), the lateral air direction element (32) and the vehicle (1) a triangle whose sides are formed by the link (30), the lateral air direction element (32) and the rear door (8, 9).

13. Rear spoiler device (10) according to Claim 12, **characterized in that** corners of the triangle are formed by the at least one first pivot joint (31) and the at least one second pivot joint (34).

14. Rear spoiler device (10) according to one of the preceding claims, **characterized in that** the roof air direction element (24) is pivotably articulated to a securing device (20) which is fitted simply to the rear door (8, 9) without being secured to the vehicle structure (2), in particular an upper edge (8a) of the rear door (8), for example, in openings at the upper edge (8a) of the rear door (8).

15. Rear spoiler device (10) according to one of the preceding claims, **characterized in that**, after they have been unlocked from the locking device (40) the lateral air direction element (32) can be pivoted about the second pivot joint (34) and the link (30) can be pivoted about the first pivot joint (31).

16. Rear spoiler device (10) according to Claim 15, **characterized in that**, in the basic position,
- the roof air direction element (24) can be placed flat on the rear door (8, 9),
- the lateral air direction element (32) can be placed flat on the rear door (8, 9) and the roof air direction element (24),
- the link (30) can be placed flat on the lateral air direction element (32) and the rear door (8, 9), and
- the rear door (8, 9) of the vehicle (1) can be folded outward out from the closed position thereof through approximately 270° and can be placed on a side wall (4, 5) of the vehicle (1), respectively.

17. Vehicle (1), in particular utility vehicle, having side walls (4, 5), a vehicle structure (2) and rear doors (8, 9), wherein a rear spoiler device (10) according to one of the preceding claims is fitted to each rear door (8, 9), wherein the rear doors can be pivoted forward through 270° when the rear spoiler devices (10) are adjusted into the basic position thereof and can be placed or locked on the side walls (4, 5).

## Revendications

1. Dispositif (10) de béquet arrière pour un véhicule (1) qui présente au moins une porte arrière (8, 9), le dispositif (10) de béquet arrière présentant au moins :
un élément latéral (32) de guidage d'air et un élément (24) de guidage d'air de toit qui peuvent être déplacés entre une position de base et une position de roulage pour prolonger le contour et guider l'air de manière dynamique lorsque la porte arrière (8, 9) est fermée,
le dispositif (10) de béquet arrière présentant une bielle oscillante (30) dotée d'une première articulation rotative (31) permettant de la fixer de manière pivotante sur la porte arrière (8, 9), la bielle oscillante (30) étant placée sur l'élément latéral (32) de guidage d'air en pouvant être déplacée au moyen d'une deuxième articulation (34) en rotation, **caractérisé en ce que**
au moins un dispositif de verrouillage (40) est prévu pour verrouiller l'élément latéral (32) de guidage d'air sur la bielle oscillante (30) et
**en ce qu'**un dispositif de couplage (60) est prévu pour coupler le déplacement du dispositif de verrouillage (40) au déplacement de l'élément (24) de guidage d'air de toit.

2. Dispositif de béquet arrière selon la revendication 1, **caractérisé en ce que** le dispositif de verrouillage (40) est configuré pour verrouiller la bielle oscillante (30) à la fois à l'élément latéral (32) de guidage d'air et au véhicule (1), et par exemple à la porte arrière (8) ou à une partie structurelle (2) du véhicule (1).

3. Dispositif (10) de béquet arrière selon la revendication 2, **caractérisé en ce que** le dispositif de verrouillage (40) est placé sur la bielle oscillante (30) de manière déplaçable et en particulier pivotante et **en ce que** lorsqu'il est déplacé, il est verrouillé sur la partie d'extrémité avant (32a) de l'élément latéral (32) de guidage d'air et de préférence aussi à la porte arrière (8, 9) ou à une pièce structurelle (2) du véhicule.

4. Dispositif de béquet arrière selon la revendication 3, **caractérisé en ce qu'**au moins deux dispositifs de verrouillage (40) sont placés à distance verticale l'un de l'autre sur la bielle oscillante (30) de manière à pouvoir pivoter et sont couplés dans leur déplacement de verrouillage par l'intermédiaire d'un dispositif (42) de blocage et de couplage.

5. Dispositif (10) de béquet arrière selon l'une des revendications précédentes, **caractérisé en ce que** le ou les dispositifs de verrouillage (40) présentent un clapet pivotant (40) sur lequel des crochets d'accrochage (36) sont prévus pour s'engager dans des logements d'encliquetage (37) de l'élément latéral (32) de guidage d'air et/ou dans des logements d'encliquetage (38) des portes arrière (8, 9) ou de la structure du véhicule, et en particulier pour s'y engager par le haut.

6. Dispositif de béquet arrière selon l'une des revendications précédentes, **caractérisé en ce qu'**aussi bien dans sa position de base que dans sa position de roulage, il est fixé exclusivement sur la porte arrière (8, 9).

7. Dispositif (10) de béquet arrière selon l'une des revendications précédentes, **caractérisé en ce qu'**un levier d'actionnement (50) qui doit être pivoté par l'utilisateur, et par lequel le ou les dispositifs de verrouillage (40) peuvent être amenés dans leur position verrouillée et d'autre part l'élément (24) de poids pour le guidage d'air, peut être rabattu vers le haut dans sa position de roulage par l'intermédiaire du dispositif de couplage (60).

8. Dispositif (10) de béquet arrière selon la revendication 7, **caractérisé en ce que** le déplacement de pivotement présente une première et une deuxième partie de pivotement, le ou les dispositifs de verrouillage (40) pouvant être amenés dans leur position verrouillée dans la première partie de pivotement et l'élément (24) de toit pour le guidage d'air pouvant être déplacé dans les deux parties du pivotement.

9. Dispositif (10) de béquet arrière selon les revendications 7 ou 8, **caractérisé en ce que** le levier d'actionnement (50) est reçu à pivotement avec le dispositif de verrouillage (40) dans un axe commun de pivotement (E), pour pivoter dans ou sur la bielle pivotante (30), entraîne le dispositif de verrouillage par l'intermédiaire d'un système d'entraînement dans la première partie du pivotement et le libère dans la deuxième partie du pivotement.

10. Dispositif (10) de béquet arrière selon l'une des revendications 7 à 9, **caractérisé en ce qu'**un moyen de transfert, par exemple une tringle de poussée (62), peut être activé par le levier d'actionnement (50) et le dispositif de couplage (60), la tringle de poussée pouvant activer une première liaison de déplacement (70) qui déplace l'élément (24) de toit pour le guidage d'air.

11. Dispositif de béquet arrière selon l'une des revendications précédentes, **caractérisé en ce que** la première articulation rotative (31) est prévue sur une extrémité avant de la bielle oscillante (60) et la deuxième articulation de rotation (34) sur une extrémité arrière de la bielle oscillante (30).

12. Dispositif (10) de béquet arrière selon l'une des revendications précédentes, **caractérisé en ce qu'**en position de roulage, la bielle oscillante (30), l'élément latéral (32) de guidage d'air et le véhicule (1) peuvent former un triangle dont les côtés sont formés par la bielle oscillante (30), l'élément latéral (32) de guidage d'air et les portes arrières (8, 9).

13. Dispositif (10) de béquet arrière selon la revendication 12, **caractérisé en ce que** les sommets du triangle sont formés par la ou les articulations rotatives (31) et la ou les deuxièmes articulations rotatives (34).

14. Dispositif (10) de béquet arrière selon l'une des revendications précédentes, **caractérisé en ce que** l'élément (24) de guidage d'air de toit est articulé de manière pivotante sur un dispositif de fixation (20) qui, sans être fixé sur la structure (2) du véhicule, est placé uniquement sur la porte arrière (8, 9), en particulier un bord supérieur (8a) de la porte arrière (8), par exemple dans des ouvertures ménagées sur le bord supérieur (8a) de la porte arrière (8).

15. Dispositif (10) de béquet arrière selon l'une des revendications précédentes, **caractérisé en ce qu'**après le déverrouillage du dispositif de verrouillage (40), l'élément latéral (32) de guidage d'air peut pivoter autour de la deuxième articulation rotative (34) et la bielle oscillante (30) peut pivoter autour de la première articulation rotative (31).

16. Dispositif (10) de béquet arrière selon la revendication 15, **caractérisé en ce qu'**en position de base :
l'élément (24) de guidage d'air de toit peut être placé à plat sur la porte arrière (8, 9),
l'élément latéral (32) de guidage d'air peut être placé à plat sur les portes arrières (8, 9) et sur l'élément (24) de guidage d'air de toit,
la bielle oscillante (60) peut être placée à plat sur l'élément latéral (32) de guidage d'air et les portes arrières (8, 9) et
la porte arrière (8, 9) du véhicule (1) peut être rabattue vers l'extérieur d'environ 240° depuis sa position fermée et peut être placée sur une paroi latérale (4, 5) du véhicule (1).

17. Véhicule (1), en particulier véhicule utilitaire, présentant des parois latérales (4, 5), une structure de véhicule (2) et des portes arrières (8, 9), un dispositif (10) de béquet arrière selon l'une des revendications précédentes étant placé sur chaque porte arrière (8, 9), les portes arrières pouvant pivoter sur 270° vers l'avant, leurs dispositifs (10) de béquet arrière sont amenés dans leur position de base et peuvent alors être placés ou verrouillés sur les parois latérales (4, 5).
